(19) Europäisches Patentamt
European Patent Office
Office européen des brevets

(11) **EP 2 031 383 A1**

(12) **EUROPEAN PATENT APPLICATION**
published in accordance with Art. 153(4) EPC

(43) Date of publication:
**04.03.2009 Bulletin 2009/10**

(51) Int Cl.:
*G01N 27/62* (2006.01)    *G01N 30/72* (2006.01)

(21) Application number: **06766506.7**

(22) Date of filing: **08.06.2006**

(86) International application number:
**PCT/JP2006/311544**

(87) International publication number:
**WO 2007/141862 (13.12.2007 Gazette 2007/50)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Shimadzu Corporation**
**Kyoto-shi, Kyoto 604-8511 (JP)**

(72) Inventors:
• **KAWANA, Shuichi**
**Kyoto-shi, Kyoto 6048511 (JP)**

• **TANEDA, Katsuyuki**
**Kyoto-shi, Kyoto 6048511 (JP)**
• **SHIMOMURA, Manabu**
**Kyoto-shi, Kyoto 6048511 (JP)**

(74) Representative: **Wilhelms · Kilian & Partner Patentanwälte**
**Eduard-Schmid-Strasse 2**
**81541 München (DE)**

(54) **DATA PROCESSOR FOR CHROMATOGRAPH MASS SPECTROMETRY**

(57)    In the case where a given mass range is repeatedly scanned to sequentially create mass spectra and create a mass chromatogram or the like, when a number of data, which are arranged on the mass axis and constitute a mass profile of the given mass range, are collected for a predetermined number of the alignment (S1 and S2), a two-dimensional filtering process is performed by correcting the target data, for each data aligned in the mass axis direction, using the data contiguous before and after in the mass axis direction and the data contiguous before and after in the time axis direction (S3). For the mass profile constituted of the data thus processed, a peak detection is performed (S4) and the peak's mass number is determined to create a mass spectrum (S5). Consequently, the mass numbers' fluctuation in the mass spectrum is moderated, the mass resolution is increased, and the accuracy of the mass chromatogram is also increased.

Fig. 2

EP 2 031 383 A1

**Description**

TECHNICAL FIELD

The present invention relates to a chromatograph mass analysis data processing apparatus for processing data obtained by a chromatograph mass spectrometer in which a chromatograph and a mass spectrometer are combined such as a gas chromatograph mass spectrometer (GC/MS) and a liquid chromatograph mass spectrometer (LC/MS). More specifically, it relates to a data processing apparatus for a chromatograph mass analysis using a mass analyzer capable of performing a scan measurement in which a predetermined mass range is repeatedly scanned.

BACKGROUND ART

In a gas chromatograph mass spectrometer (GC/MS), a liquid chromatograph mass spectrometer (LC/MS), and a supercritical fluid chromatograph mass spectrometer (SFC/MS), sample components are separated in the time axis direction by a chromatograph and then sent to a mass analyzer, which ionizes the components, separates the resultant ions according to their mass and detects them. Based on the data obtained by a scan measurement in which a predetermined mass range is scanned by a mass analyzer, it is possible to obtain a mass spectrum which shows the relationship between a mass number (i.e. mass-to-charge ratio m/z) and a relative intensity (i.e. ion intensity) at a certain point in time. In addition, by repeating a mass scan in a predetermined mass range, it is possible to obtain mass spectrums at predetermined time intervals for example in a time axis direction. Based on the obtained mass spectrums, a total ion chromatogram and mass chromatogram can also be created.

Ideally, only the peaks of the ion species generated from the object to be measured appear on a mass spectrum. However, in practice, undesired peaks appear due to various factors. For example, in the LC/MS, the resultant mass spectrum often contain undesired peaks originating from compounds other than the object to be measured, such as a free substance from the liquid phase of a separation column, sample solvent, mobile phase solvent, or contaminant included in the sample. In some cases, the peaks created by a noise in a detector may be included (refer to Patent Document 1 for example).

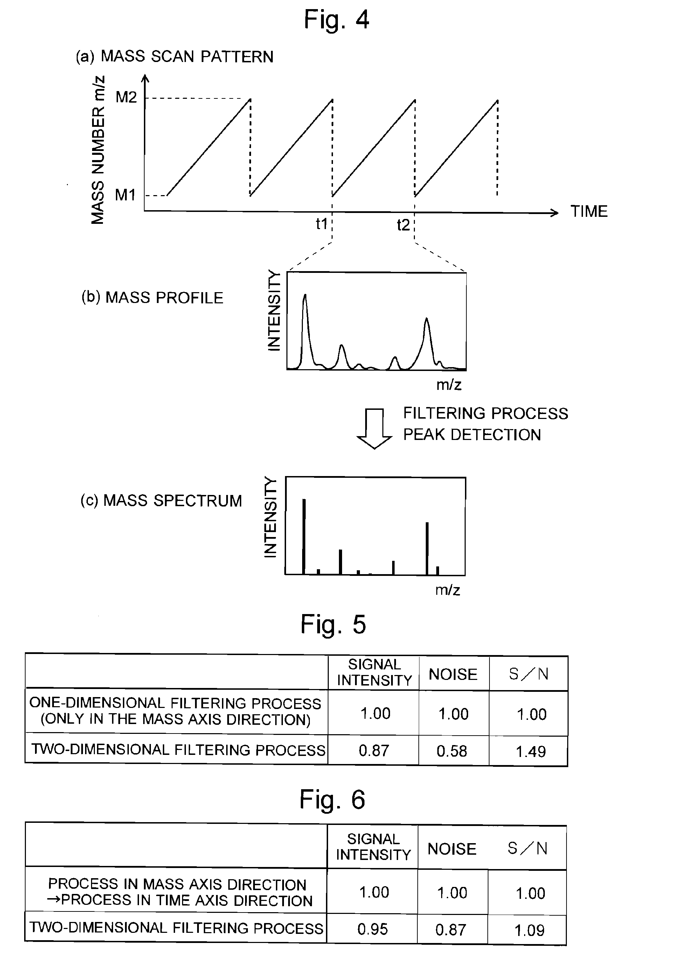

Given this factor, in order to reduce the influence of the noise as previously described and various variable factors other than the noise, the following process is performed in a conventional chromatograph mass spectrometer. That is, the mass number of the ion to be detected is scanned to vary in the range between M1 and M2 as time progresses as illustrated in Fig. 4(a) for example. In one mass scan period, e.g. in the range between the time t1 and t2, the data which forms the signal waveform (which will be called "a mass profile" hereinafter) as illustrated in Fig. 4(b) for example is obtained by an ion detector of the mass spectrometer. For the mass profile, a filtering process such as an averaging is performed for a plurality of data included in a predetermined small mass range approximate to the target mass number in order to reduce the influence of a noise or other factors. After this process, a peak detection is performed to find a peak, and a line corresponding to the peak is drawn on the mass axis to create a mass spectrum as illustrated in Fig. 4(c). In some cases, a mass profile is created by summing up the data obtained by a plurality of mass scans rather than using data obtained by one mass scan, and a mass spectrum is created based on this mass profile.

In the case where a mass chromatogram focusing on a specific mass number M for example is created, a filtering process is subsequently performed in some cases in the time axis direction for the signal intensity of the mass number M on the mass spectrum obtained as time progresses as previously described in order to further reduce the influence of a noise or other factors.

However, the conventional data processing method as previously described has the following problem. That is, in performing a filtering process in the mass axis direction for a mass profile so as to create a mass spectrum, if the noises are superimposed, the waveform's barycentric position is shifted on the mass axis. Therefore, if a peak detection is performed based on this result, the mass number where a peak appears is shifted. Since a filtering process in the mass axis direction is independently performed for the mass profiles obtained at different points in time, even for the peaks for the ions having the same mass number, the mass number on the mass spectrum might be different between the case where the noises are superimposed as previously described and the case where the noises are not superimposed. Hence, the detected mass numbers fluctuate every time. Due to such reasons, the mass resolution of the mass spectrum decreases and so does the accuracy of the mass chromatogram.

[Patent document 1 Japanese Unexamined Patent Application Publication No. 2005-221276 (Paragraph [0002])

DISCLOSURE OF THE INVENTION

PROBLEM TO BE SOLVED BY THE INVENTION

The present invention is accomplished to solve the aforementioned problem, and the objective thereof is to provide a chromatograph mass analysis data processing apparatus capable of, in the case where a mass scan is repeatedly performed to create a mass spectrum each time, moderating the mass number's fluctuation among the points in time of each mass scan, so that the peak detection accuracy and mass resolution are increased.

MEANS FOR SOLVING THE PROBLEM

To solve the previously-described problem, the present invention provides a chromatograph mass analysis data processing apparatus for processing data obtained by a chromatograph mass spectrometer in which a sample component temporally separated by a chromatograph is introduced into a mass analyzer and a scan measurement across a predetermined mass range is repeatedly performed, including:

a) a data collector for collecting a number of data which constitute a mass profile corresponding to a predetermined mass range, for each of a plurality of mass profiles in a time axis direction;

b) a two-dimensional filtering processor for performing a predetermined computational process for each data, which is virtually and two-dimensionally arranged in a mass axis direction and in a time axis direction, collected by the data collector by using a plurality of data contiguous or adjacent in the mass axis direction and contiguous or adjacent in the time axis direction to correct a target data;

c) a peak detector for performing a peak detection for a mass profile composed of data corrected by the two-dimensional filtering processor to find a peak; and

d) a mass spectrum creator for creating a mass spectrum based on the peak detected by the peak detector.

That is, in a conventional data processing apparatus, a one-dimensional filtering process in the mass axis direction is first performed for each data constituting the mass profile to correct the mass profile. Then, based on the mass profile corrected, a peak detection is performed to create a mass spectrum, and a filtering process in the time axis direction is performed for the data constituting the mass spectrum. On the other hand, in the data processing apparatus according to the present invention, the filtering processes in the mass axis direction and in the time axis direction are simultaneously performed, i.e. two-dimensionally. Then, a peak detection is performed by using a mass profile which is the result of the filtering processes in both axes' directions, then a mass spectrum is created in which a peak found by the peak detection is drawn. A concrete computation in the two-dimensional filtering processor may be, for example, a process in which the value of the contiguous data or adjacent data is added to that of the target data, an averaging process in which the value obtained by the addition is divided by the number of the original data, or other process.

EFFECTS OF THE INVENTION

As just described, in the present invention, a mass profile can be obtained which has been two-dimensionally filtering-processed (i.e. in the mass axis direction and in the time axis direction). That is, a mass profile in which the influence of the noise or the like is reduced in both axes' directions is obtained and a peak detection is performed for the mass profile. Therefore, the peak detection accuracy is increased. Hence, the fluctuation in the time axis direction regarding the mass number of the peaks drawn on the mass spectrum is moderated, which leads to the improvement of the mass resolution. In addition, since the stability of the mass axis in a plurality of mass spectra increases, the accuracy of the mass chromatogram also increases.

In the chromatograph mass analysis data processing apparatus according to the present invention, the target data can be corrected in the mass axis direction and in the time axis direction by using the appropriate number of contiguous data and adjacent data. As an example, the two-dimensional filtering processor may select the same number of contiguous data before and after the target data in the mass axis direction. In this case, if the number of the data to be used is increased, although the effect of the filtering of noise reduction increases, the peak detection may possibly become difficult rather than become easy because the mass profile is planarized. Therefore, the number of the contiguous data before and after the target data in the mass axis direction may preferably be a few or less.

The two-dimensional filtering processor may preferably select the same number of contiguous data before and after the target data also in the time axis direction.

The two-dimensional filtering processor may perform, in the case where the filtering process is performed for each of the plural data on the same point in time constituting one mass profile, the calculation of the moving average or the summation while shifting the data one by one on the mass axis. In consequence, since the same computational process is performed for each data, the accuracy of the waveform of the mass profile after the process is increased, which leads to the higher peak detection accuracy. The same process of the moving average or summation may be performed also on the time axis.

In adding the value of the contiguous or adjacent data to the target data as previously described, a predetermined weighting process, e.g. decreasing the weighting for the temporally approximate data, may be performed other than equally treating the value of each data. The weighting can prevent the effect of the signal intensity of the temporally approximate data from becoming too strong. In particular, in the case where the temporal intensity variation is large in a mass chromatogram, it is possible to prevent the variation from becoming extremely small.

BRIEF DESCRIPTION OF THE DRAWINGS

Fig. 1 is an overall configuration diagram of a gas chromatograph mass spectrometer (GC/MS) including a data processing apparatus which is an embodiment of the present invention.
Fig. 2 is a flowchart illustrating the characteristic procedure of the data processing in the data processing apparatus according to the present embodiment.
Fig. 3 is a pattern diagram for explaining the filtering process in the data processing apparatus according to the present embodiment.
Fig. 4 is an explanation diagram illustrating the relationship between a mass profile and a mass spectrum for a mass scan.
Fig. 5 is a diagram illustrating the result of the experiment for explaining the effect of the present invention.
Fig. 6 is a diagram illustrating the result of the experiment for explaining the effect of the present invention.
Fig. 7 is a diagram illustrating an example of a mass spectrum by an actual measurement for explaining the effect of the present invention.

BEST MODE FOR CARRYING OUT THE INVENTION

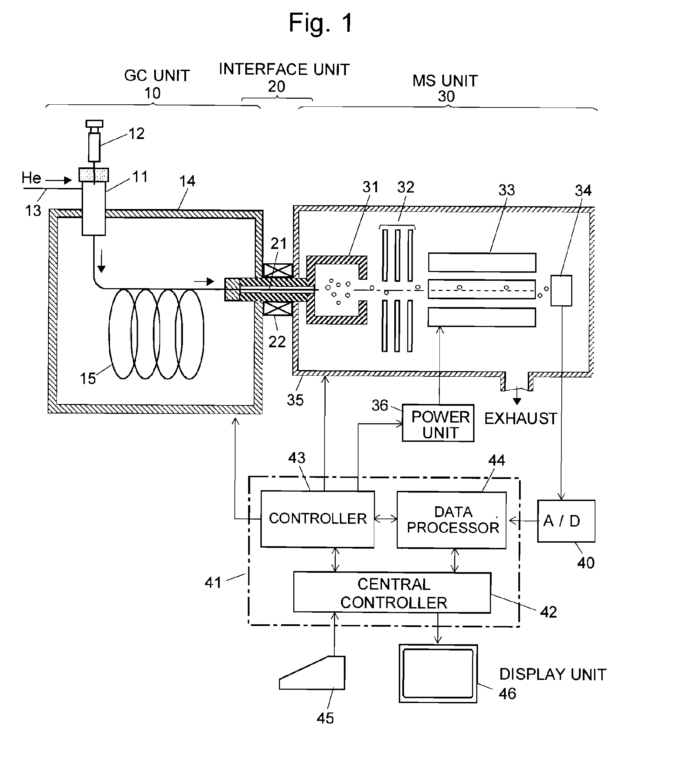

Hereinafter, an embodiment of the chromatograph mass analysis data processing apparatus according to the present invention will be explained with reference to the figures. Fig. 1 is an overall configuration diagram of a gas chromatograph mass spectrometer (GC/MS) including a data processing apparatus of the present embodiment.
In Fig. 1, in a gas chromatograph (GC) unit 10, a sample vaporizing chamber 11 is provided at the inlet of a column 15 which is heated to an appropriate temperature by a column oven 14. A carrier gas (helium (He) in this embodiment) is provided at a predetermined flow rate into the sample vaporizing chamber 11 through a carrier gas passage 13 and then the carrier gas flows into the column 15. In this state, when a small amount of liquid sample is injected into the sample vaporizing chamber 11 by a microsyringe 12, the liquid sample is immediately vaporized and sent into the column 15 on the carrier gas flow. While passing through the column 15, each component of the sample gas is temporally separated, and reaches the outlet. After that, each component passes through a sample introduction tube 21 heated by a heater 22 in an interface unit 20, and then is introduced into an ionization chamber 31 in a mass spectrometer (MS) unit 30.
In the MS unit 30, the sample molecule introduced into the ionization chamber 31 is ionized by contacting with a thermion for example. The ions generated are extracted from the ionization chamber 31, converged by a lens electrode 32, and then introduced into a longitudinal space of a quadrupole mass filter 33 composed of four rod electrodes. To the quadrupole mass filter 33, a voltage in which a direct current voltage and a radio-frequency voltage are superimposed is applied from a power unit 36, and only the ions having a mass number corresponding to the applied voltage pass through the longitudinal space, and reach an ion detector 34 to be detected. The ionization chamber 31, lens electrode 32, quadrupole mass filter 33 and ion detector 34 are disposed in a vacuum chamber 35 which is vacuum-suctioned by a vacuum pump (not shown).
The detection signal by the ion detector 34 is changed into digital data by an analog/digital (A/D) converter 40 and sent to a data processor 44, which functions as the data processor according to the present invention. The data processor 44 performs a predetermined computational process to create a mass spectrum, mass chromatogram, or total ion chromatogram. The data processor 44 further performs a quantitative analysis, qualitative analysis, or other kinds of analyses. The operation of each block constituting the GC unit 10, interface unit 20, and MS unit 30 is totally controlled by an analysis controller 43. The function of the data processor 44 and analysis controller 43 is realized by executing dedicated control/processing software installed on a personal computer 41. A central controller 42 included in the personal computer 41 performs a basic control such as an input/output control for an operation unit 45 including a keyboard and a pointing device such as a mouse, for a display unit 46, or for other units.
When a scan measurement is performed in this GC/MS, the voltage applied to the quadrupole mass filter 33 from the power unit 36 is scanned. To be more precise, in general, a voltage in which a direct voltage (U) and a radio-frequency voltage ($V \cdot \cos\omega t$) are superimposed is applied to the four rod electrodes of the quadrupole mass filter 33 in such a manner that a voltage of $+(U+V \cdot \cos\omega t)$ is applied to a pair of the rod electrodes facing across the central axis, and a voltage of $-(U+V \cdot \cos\omega t)$ is applied to the other pair. If U and V are changed as time progresses while keeping U/V constant, the mass range between the mass numbers M1 and M2 can be scanned as illustrated in Fig. 4(a) for example.

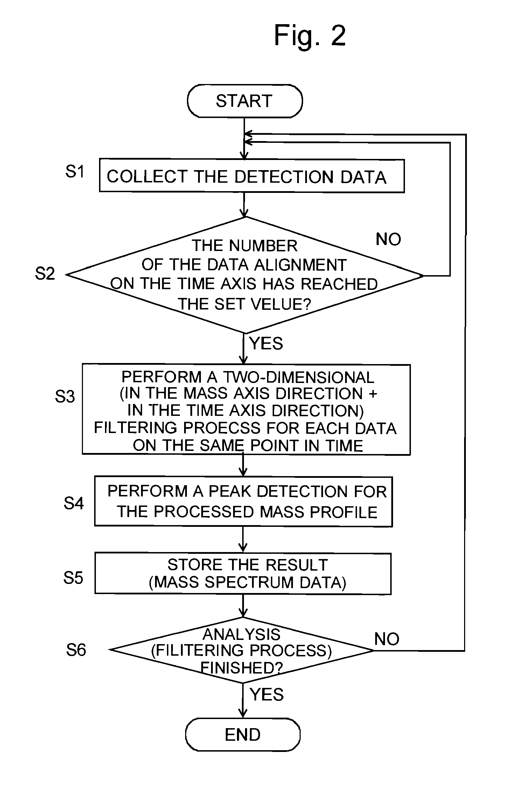

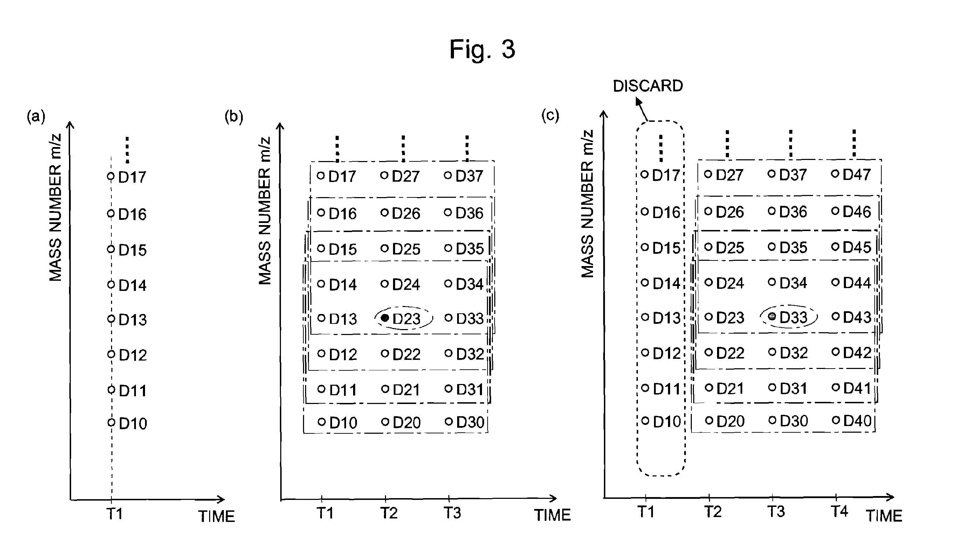

Next, a characteristic data processing operation in performing a scan measurement in this GC/MS will be described in detail with reference to Figs. 2 and 3. Fig. 2 is a flowchart illustrating the procedure of this data processing, and Fig. 3 is a pattern diagram for explaining a filtering process operation.

When an analysis is initiated, in the GC unit 10, a sample is injected into the sample vaporizing chamber 11, and the vaporized sample is introduced into the column 15 on the carrier gas flow. While passing through the column 15, the components contained in the sample are separated and then introduced into the ionization chamber 31 with time lag. In the mass spectrometer unit 30, while the scan for the mass number to be selected is repeatedly performed in the quadrupole mass filter 33 as previously described, a detection signal is obtained by the ion detector 34. In the data processor 44, the data for each mass scan obtained as time progresses is collected and temporarily stored in a storage unit (Step S1). Although a number of data constituting a mass profile as illustrated in Fig. 4(b) are provided in the period of time t1 through t2 as illustrated in Fig. 4(a) for example, the data obtained by one mass scan (or the data calculated by summing up the data obtained by a plurality of mass scans) are treated as the data obtained at the same point in time.

That is, as illustrated in Fig. 3(a), it is assumed that a number of data D10, D 11, D12, D13, ..., which constitute one mass profile, are obtained at a certain time T1. It is also possible to assume that, at the time T2 after a given period of time, a number of data D20, D21, D22, D23, ..., which constitute another mass profile, are obtained. Therefore, the data obtained at given time intervals can be assumed to be virtually and two-dimensionally arranged in the time axis direction and in the mass axis direction as illustrated in Fig. 3(b).

When a data collection is performed as just described and the number of the data alignment on the time axis has reached a set value (Step S2), a two-dimensional filtering process is performed for the collected data (Step S3). At this point in time, if the setting value in Step S2 is "3" as an example, the process of Step S3 is performed on obtaining the data constituting the mass profiles at times T1, T2, and T3.

The two-dimensional filtering process is a process in which a filtering operation is simultaneously performed in both the mass axis direction and the time axis direction. As illustrated in Fig. 3(b), for one target data (D23 in this example), the neighboring data on the mass axis and on the time axis, and the target data are used to obtain the data S23 at the position corresponding to the target data D23 (i.e. the value of the target data D23 is corrected to calculate S23). To be more precise, the neighboring data are composed of fourteen pieces of data: two each before and after on the mass axis and one each before and after on the time axis regarding the target data. Hence, including the target data, the following fifteen pieces of data in total are used: D 11, D12, D 13, D 14, D 15, D21, D22, D23, D24, D25, D31, D32, D33, D34, and D35. As an example, the summation value or the simple average of the target data and the neighboring data (i.e. fifteen data in total) is calculated to obtain S23. That is:

$$S23=D11+D12+D13+D14+D15+D21+D22+D23+D24+D25+D31+D32+D33+D34$$
$$+D35 \quad \cdots (1)$$

or,

$$S23=(D11+D12+D13+D14+D15+D21+D22+D23+D24+D25+D31+D32+D33+D34$$
$$+D35)/15 \quad \cdots (2)$$

The aforementioned two-dimensional filtering process is performed for each data arranged on the same point in time (in the longitudinal direction in Fig. 3). That is, as indicated by a rectangle of an alternate long and short dash line in Fig. 3(b), while the range of the fifteen pieces of data which is the target of the two-dimensional filtering process is shifted in the mass axis direction, the summation or simple averaging process for the fifteen pieces of data included in the range is repeated to obtain the value of the target data located at the center of the range. However, for the lower end and upper end of the mass range or when the process is initiated and finished, it is not possible to ensure the two-dimensional fifteen data as previously described. Therefore, an appropriate processing may be performed such as: the number of the data to be used is decreased and then a correction is performed to negate the influence. Alternatively, the central data is obtained only within the range where the fifteen pieces of data can be ensured. Thus the entire collection of data D20, D21, D22, D23, ..., which constitute the mass profile at time T2 are corrected to S20, S21, S22, S23,

In the data processor 44, for the mass profile corrected as just described, a peak detection is performed in the same manner as has been conventionally performed (Step S4). Accordingly, the peak with a determined mass number is obtained and the mass axis as a mass spectrum is also determined. Therefore, the mass spectrum data obtained by this process is stored in the storage unit (Step S5). After that, it is determined whether or not the analysis is finished (or filtering process is finished) is determined, and if it is not finished, the process returns to Step S1. Therefore, for example, if the mass profile at time T2 is corrected by a two-dimensional filtering process and the mass spectrum data in which the mass axis has been determined based on this process is stored in the storage unit, it is required to wait until the data constituting the mass profile at time T4 are collected. On the other hand, if the filtering process for the mass profile at time T2 is finished, the data of time T1 (i.e. D10, D11, D12, D 13, ...) can be discarded because they are no longer necessary for the calculation, although they may be stored as raw data as a matter of course.

In the previously-described filtering process, each surrounding data for obtaining the target data was equally treated. In that case, the influence of the value of the data approximate in the time axis direction tends to become too strong. Given this factor, for example, weighting the data in the time axis direction may be preferably performed. For example, in place of the formula (1), S23 may be set as follows:

$$S23=(D11+D12+D13+D14+D15)\times\alpha1+(D21+D22+D23+D24+D25)\times\alpha2+(D31+D32$$

$$+D33+D34+D35)\times\alpha3 \quad \bullet\bullet\bullet(3)$$

where the weighting coefficients $\alpha1$, $\alpha2$, and $\alpha3$ may be appropriately set. For example, they may be set to satisfy $\alpha1=\alpha3<\alpha2$, in order to relatively moderate the influence of the value of the data approximate in the time axis direction.

In the previously-described embodiment, the neighboring data were composed of two data each in the forward and backward directions on the mass axis and one data each in the forward and backward directions on the time axis to correct the target data. However, the number of the neighboring data can be appropriately changed.

Next, the result of the comparison between the case where a two-dimensional filtering process as previously described is performed and the case where a one-dimensional filtering process is performed in a conventional manner will be described. In order to evaluate the effect of the two-dimensional filtering process as in the present invention, a two-dimensional filtering process (with a weighting) and a one-dimensional filtering process in the mass axis direction are performed by using the data actually collected by a GC/MS. The comparison result of these two cases is illustrated in Fig. 5. This result indicates the following: by performing the two-dimensional filtering process, the signal intensity of the peak slightly decreases, but more than that, the noise is significantly restrained. Consequently, the signal-to-noise (S/N) ratio increases approximately by 50 % in comparison to the case where the filtering process is performed in the mass axis direction.

Fig. 6 illustrates a comparison between the case where a two-dimensional filtering process as in the present invention is performed and the case where a one-dimensional filtering process in the time axis direction is performed after a one-dimensional filtering process in the mass axis direction is performed. If the fluctuation of the noise in the mass axis direction is not time-dependent, the two results should be the same. However, it is understood that the simultaneously-performed two-dimensional filtering process has a better noise restraint effect and better S/N ratio. Accordingly, it is understood that, with the data processing apparatus according to the present invention as previously described, an improvement effect of the peak's S/N ratio is provided more than ever before.

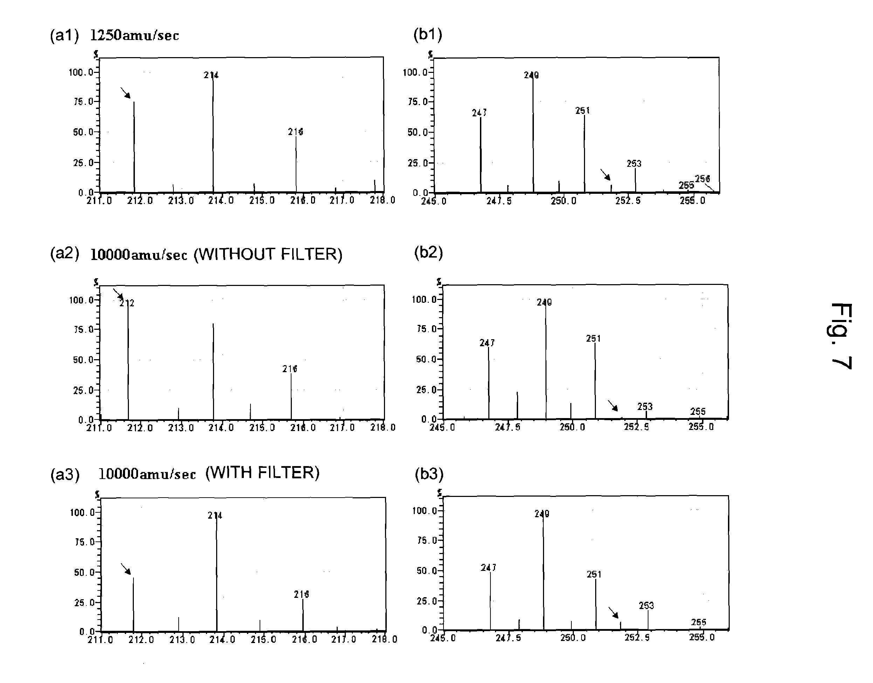

Fig. 7 illustrates the effect of a two-dimensional filtering process as in the present invention with actual mass spectra. In Fig. 7, (a1) and (b1) are examples in which the scan speed is relatively slow, and (a2), (b2), (a3), and (b3) are examples in which the scan speed is relatively high. In general, with high scan speed, the influence of the mass number shift of the peak by a noise or other factors tends to significantly appear. For example, as indicated by an arrow in Fig. 7(a2), if a filtering process is not performed in the case where the scan speed is high, the peak of m/z212 is the highest peak, which, however, is not the highest peak in the case where the scan speed is fast (refer to Fig. 7(a1)). It is thought that the reason of this is either of the following: the signal intensity of the other mass numbers around the peak of m/z212 is added to it, or the signal intensity of the peak of m/z214 which should be the highest peak has dispersed to other mass numbers. Contrary to this, in the case where a two-dimensional filtering process is performed, it is understood that the peak of m/z214 is the highest as illustrated in Fig. 7(a3) and the entire peaks' tendency is approaching the state of Fig. 7(a1) in which the scan speed is relatively slow.

In Fig 7(b2), the peak of m/z252 which clearly appears in Fig. 7(b1) is hardly seen. On the other hand, in the case where the two-dimensional filtering process is performed, the peak of m/z252 clearly appears as illustrated in Fig. 7(b3). Accordingly, it is understood that, by performing a two-dimensional filtering process as in the present invention, an accurate peak detection can be performed even under the condition where a scan speed is fast and the peak's mass number shift tends to occur.

It should be noted that each of the aforementioned examples is an example, and a modification, adjustment or addition can be appropriately made within the spirit of the present invention.

**Claims**

1. A chromatograph mass analysis data processing apparatus for processing data obtained by a chromatograph mass spectrometer in which a sample component temporally separated by a chromatograph is sequentially introduced into a mass analyzer and a scan measurement across a predetermined mass range is repeatedly performed, comprising:

   a) a data collector for collecting a number of data which constitute a mass profile corresponding to a predetermined mass range, for each of a plurality of mass profiles in a time axis direction by a scan measurement;
   b) a two-dimensional filtering processor for performing a predetermined filtering process for each data, which is virtually and two-dimensionally arranged in a mass axis direction and in a time axis direction, collected by the data collector by using a plurality of data approximate in the mass axis direction and approximate in the time axis direction to obtain target data;
   c) a peak detector for performing a peak detection for a mass profile composed of data corrected by the two-dimensional filtering processor to find a peak; and
   d) a mass spectrum creator for creating a mass spectrum based on the peak detected by the peak detector.

2. The chromatograph mass analysis data processing apparatus according to claim 1, wherein the filtering process is an addition process in which contiguous data or adjacent data is added to the target data, or an averaging process in which a value obtained by the addition is divided by an original data number.

3. The chromatograph mass analysis data processing apparatus according to claim 1, wherein the two-dimensional filtering processor selects a same number of contiguous data before and after the target data in the mass axis and then performs a filtering process.

4. The chromatograph mass analysis data processing apparatus according to either claim 1 or 2, wherein the two-dimensional filtering processor selects a same number of contiguous data before and after the target data in the time axis and then performs a filtering process.

5. The chromatograph mass analysis data processing apparatus according to claim 2, wherein the two-dimensional filtering processor performs a predetermined weighting in performing the addition process or the averaging process.

# Fig. 1

# Fig. 2

START

S1 — COLLECT THE DETECTION DATA

S2 — THE NUMBER OF THE DATA ALIGNMENT ON THE TIME AXIS HAS REACHED THE SET VELUE? — NO

YES

S3 — PERFORM A TWO-DIMENSIONAL (IN THE MASS AXIS DIRECTION + IN THE TIME AXIS DIRECTION) FILTERING PROECSS FOR EACH DATA ON THE SAME POINT IN TIME

S4 — PERFORM A PEAK DETECTION FOR THE PROCESSED MASS PROFILE

S5 — STORE THE RESULT (MASS SPECTRUM DATA)

S6 — ANALYSIS (FILITERING PROCESS) FINISHED? — NO

YES

END

Fig. 3

## Fig. 4

(a) MASS SCAN PATTERN

(b) MASS PROFILE

FILTERING PROCESS
PEAK DETECTION

(c) MASS SPECTRUM

## Fig. 5

| | SIGNAL INTENSITY | NOISE | S／N |
|---|---|---|---|
| ONE-DIMENSIONAL FILTERING PROCESS (ONLY IN THE MASS AXIS DIRECTION) | 1.00 | 1.00 | 1.00 |
| TWO-DIMENSIONAL FILTERING PROCESS | 0.87 | 0.58 | 1.49 |

## Fig. 6

| | SIGNAL INTENSITY | NOISE | S／N |
|---|---|---|---|
| PROCESS IN MASS AXIS DIRECTION →PROCESS IN TIME AXIS DIRECTION | 1.00 | 1.00 | 1.00 |
| TWO-DIMENSIONAL FILTERING PROCESS | 0.95 | 0.87 | 1.09 |

# Fig. 7

(a1) 1250amu/sec

(b1)

(a2) 10000amu/sec (WITHOUT FILTER)

(b2)

(a3) 10000amu/sec (WITH FILTER)

(b3)

## INTERNATIONAL SEARCH REPORT

| International application No. |
|---|
| PCT/JP2006/311544 |

| A. CLASSIFICATION OF SUBJECT MATTER |
|---|
| *G01N27/62*(2006.01)i, *G01N30/72*(2006.01)n |

According to International Patent Classification (IPC) or to both national classification and IPC

| B. FIELDS SEARCHED |
|---|

Minimum documentation searched (classification system followed by classification symbols)
G01N27/62-27/70, G01N30/72

Documentation searched other than minimum documentation to the extent that such documents are included in the fields searched

| Jitsuyo Shinan Koho | 1922-1996 | Jitsuyo Shinan Toroku Koho | 1996-2006 |
|---|---|---|---|
| Kokai Jitsuyo Shinan Koho | 1971-2006 | Toroku Jitsuyo Shinan Koho | 1994-2006 |

Electronic data base consulted during the international search (name of data base and, where practicable, search terms used)
JSTPlus(JDream2)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2001-028252 A (JEOL Ltd.), 30 January, 2001 (30.01.01), Full text; all drawings (Family: none) | 1-5 |
| A | JP 2000-131284 A (Shimadzu Corp.), 12 May, 2000 (12.05.00), Full text; all drawings (Family: none) | 1-5 |
| A | JP 5-164752 A (Shimadzu Corp.), 29 June, 1993 (29.06.93), Full text; all drawings (Family: none) | 1-5 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 01 September, 2006 (01.09.06) | 12 September, 2006 (12.09.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

# EP 2 031 383 A1

| | INTERNATIONAL SEARCH REPORT | International application No. |
|---|---|---|
| | | PCT/JP2006/311544 |

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 62-172261 A  (Nippon Bunko Kogyo Kabushiki Kaisha), 29 July, 1987 (29.07.87), Full text; all drawings (Family: none) | 1-5 |

Form PCT/ISA/210 (continuation of second sheet) (April 2005)

14

**EP 2 031 383 A1**

**REFERENCES CITED IN THE DESCRIPTION**

**Patent documents cited in the description**

- JP 2005221276 A